# EUROPÄISCHE PATENTANMELDUNG

(11) **EP 0 921 036 A2**
(43) Veröffentlichungstag der Anmeldung: **09.06.1999**
(21) Anmeldenummer: 98121979.3
(22) Anmeldetag: 19.11.1998
(51) Int. Cl.: B60R 9/042, B60R 9/10

(54) **Vorrichtung zum Transportieren von Fahrrädern auf Kraftfahrzeugen**

(30) Priorität: 02.12.1997 DE 29721292 U
(71) Anmelder: Inter- Union Technohandel GmbH, 76829 Landau (DE)
(72) Erfinder: Siering, Günter, 76831 Heuchelheim-Klingen (DE)
(74) Vertreter: Patentanwälte Möll und Bitterich

(57) **Zusammenfassung**

Um Fahrräder liegend auf dem Dach von Kraftfahrzeugen (1) transportieren zu können, wird eine Vorrichtung verwendet, die aus zwei parallelen, C-förmigen Laufschienen (11) und einem aus Rohren gebildeten Rahmen (20) besteht, der mit Hilfe von Laufrollen in den Laufschienen (11) läuft. Der Rahmen (20) ist in der Breite verstellbar. Im frontseitigen Bereich der Laufschienen (11) sind den Rahmen (20) haltende Stützrollen befestigt. Ein Teil der Rahmenrohre bildet eine Karosseriestütze (28) mit großflächiger Auflage. Klemmeinrichtungen (30) fixieren den Rahmen (20) während des Dachtransports an den Laufschienen (11).

## Beschreibung

Die Erfindung betrifft Vorrichtungen für den liegenden Transport von Fahrrädern und dergleichen auf dem Dach von Kraftfahrzeugen gemäß dem Oberbegriff des Anspruchs 1.

Vorrichtungen, mit deren Hilfe ein oder mehrere Fahrräder auf dem Dach von Kraftfahrzeugen, beispielsweise Personenkraftwagen, transportiert werden können, sind bekannt und zahlreich in Gebrauch. Üblicherweise werden die Fahrräder stehend transportiert. Stehend haben die Fahrräder einen ungünstig hohen Schwerpunkt und bieten dem Fahrtwind und etwaigen Seitenwinden eine große Angriffsfläche. Außerdem können nur kräftige und groß gewachsene Personen die Fahrräder von der Straße auf das Fahrzeugdach und zurück heben.

Es sind auch schon Vorrichtungen bekannt geworden, mit deren Hilfe Fahrräder im liegenden Zustand auf dem Fahrzeugdach transportiert werden können. Eine solche Vorrichtung ist bekannt aus der DE 31 07 196 A1. Diese besitzt zwei parallele Laufschienen, die quer über das Fahrzeugdach gelegt und an der Regenrinne der Karosserie befestigt werden. Des weiteren umfaßt die bekannte Vorrichtung einen Rohrrahmen mit einem zweiachsigen Fahrwerk, dessen Laufrollen in den Laufschienen geführt sind. Die Laufschienen besitzen Aussparungen, durch die die Laufrollen der einen Achse herausgehoben werden können, so daß der Rahmen dann an der Seite der Karosserie vorsichtig abgesenkt werden kann, mit der zweiten Achse aber noch in den Laufschienen hängt. Ist der Rahmen ganz abgesenkt, kann er viel bequemer be- und entladen werden. Zur Fixierung des Rahmens während des Dachtransports sind an den Laufschienen Rasthaken angeordnet, die beim Einschieben des Rahmens federnd in diesen einrasten.

Da moderne Kraftfahrzeuge keine Regenrinnen mehr besitzen, sondern mit versenkt angeordneten Fixpunkten als Dachbefestigungen ausgerüstet sind, deren Abstände sich je nach Fahrzeugtyp und Hersteller unterscheiden, ist die Verwendbarkeit der bekannten Dachtransportvorrichtung stark eingeschränkt. Für jedes Fahrzeugmodell muß eine eigene Konstruktion entwickelt, produziert und auf Lager gehalten werden. Dies ist unbefriedigend. Auch sind Beschädigungen der Karosserie oder der Lackierung durch den herabgelassenen Rahmen wegen dessen kleiner Auflageflächen und scharfen Kanten nicht zu vermeiden. Außerdem ist die Befestigung des beweglichen Rahmens mit Hilfe der Rasthaken nicht spielfrei, so daß unschöne Klappergeräusche unvermeidlich sind. Diese Nachteile machen die mit dem liegenden Transport der Fahrräder verbundenen Vorteile wieder zunichte.

Der vorliegenden Erfindung liegt daher die Aufgabe zugrunde, eine Vorrichtung zum liegenden Transportieren von Fahrrädern auf Fahrzeugdächern anzugeben, die problemlos montiert werden kann, Beschädigungen der Karosserie vermeidet und während des Dachtransports spielfrei befestigt ist.

Diese Aufgabe wird gelöst durch eine Vorrichtung mit den Merkmalen des Anspruchs 1.

Dank der vorzugsweise stufenlosen Breitenverstellbarkeit des Rahmens können die Laufschienen problemlos an den modelltypischen Dachbefestigungspunkten montiert werden. Der erfindungsgemäße Dachträger ist somit für alle Fahrzeugtypen verwendbar. Dank der frontseitigen Stützrollen werden die Gewichtskräfte des fahrradbestückten Rahmens optimal abgetragen. Auch sorgen diese Stützrollen dafür, daß der Rahmen ausreichend Abstand zur Seitenwand der Karosserie erhält, so daß Beschädigungen ausgeschlossen sind. Außerdem ist aus einem Teil der Rahmenrohre eine spezielle Karosseriestütze mit großer Auflagefläche gebildet, so daß die Druckkräfte klein bleiben. Dank der Klemmeinrichtung sind Rahmen und Laufschienen während des Dachtransports fest miteinander verbunden, so daß Eigenbewegungen und Klappergeräusche völlig entfallen.

Gemäß einer vorteilhaften Ausgestaltung der Erfindung sind die für die Breite des Rahmens verantwortlichen Rohre teleskopierbar.

Unterstützt wird die stufenlose Verstellbarkeit der teleskopierbaren Rohre noch durch Schraubklemmen, die vom Benutzer leicht geöffnet und geschlossen werden können.

Vorzugsweise ist die Karosseriestütze dick gepolstert. Auf diese Weise werden Beschädigungen sicher vermieden.

Gemäß einer Weiterbildung der Erfindung sind an der Frontseite des Rahmens Handgriffe vorgesehen. Diese erleichtern dem Benutzer die Handhabung des Rahmens.

Gemäß einer Ausgestaltung der Erfindung sind die Klemmeinrichtungen mit Gewindestange und Handrad ausgerüstet.

Eine bevorzugte Alternative hierzu verwendet Hebel-Schnellspanner. Mit deren Hilfe läßt sich die Klemmverbindung zwischen Rahmen und Laufschienen besonders einfach und schnell herstellen und lösen.

Damit die die Fahrradräder aufnehmenden und haltenden V-Schienen die insbesondere stufenlose Breitenverstellbarkeit nicht behindern, werden sie vorteilhafterweise mit Langlöchern ausgerüstet.

Vorzugsweise bestehen die V-Schienen aus zwei gegeneinander verschiebbaren Teilen. Diese Ausführungsform ist auch günstiger für Verpackung und Transport.

Gemäß einer Ausgestaltung der Erfindung sind die Laufschienen mit Einrichtungen zur lösbaren Befestigung am jeweiligen Kraftfahrzeug ausgerüstet.

Gemäß einer bevorzugten Alternative hierzu sind die Laufschienen mit Einrichtungen zur lösbaren Befestigung an einem kraftfahrzeugspezifischen Dachlastträger ausgerüstet. Diese Variante hat den Vorteil, daß der erfindungsgemäße Fahrradträger mit praktisch allen Dachlastträgern, auch mit den von den Automobilfirmen angebotenen, verwendet werden kann.

Gemäß einer Weiterbildung der Erfindung sind an den Laufschienen Rasthaken vorgesehen, die den Rahmen zusätzlich fixieren.

Anhand der Zeichnung soll die Erfindung in Form eines Ausführungsbeispiels näher erläutert werden. Es zeigen
- Fig. 1: eine Frontansicht eines Kraftfahrzeugs mit einem Dachgepäckträger in Be- und Entladeposition für den liegenden Transport von Fahrrädern,
- Fig. 2: eine Draufsicht auf den Dachgepäckträger der Fig. 1 in vergrößerter Darstellung und
- Fig. 3: eine Seitenansicht des Kraftfahrzeugs der Fig. 1 mit dem Dachträger in Transportposition.

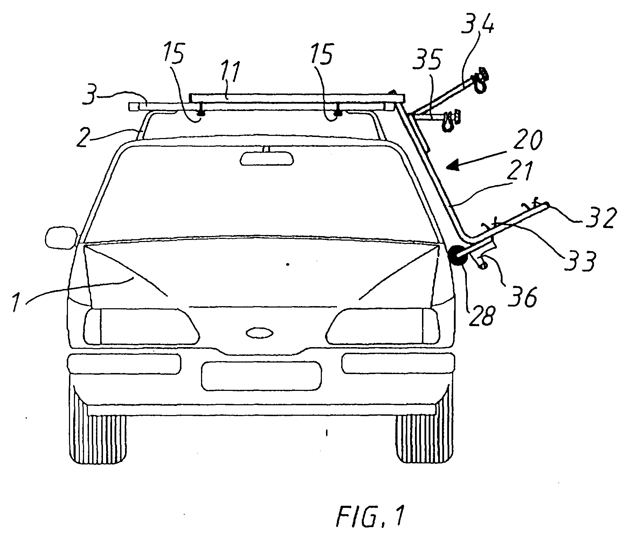

Fig. 1 zeigt die Frontansicht eines Kraftfahrzeugs 1, an dessen fahrzeugtypischen Dachbefestigungspunkten ein üblicher Dachlastträger 2, 3 befestigt ist. Dachlastträger werden sowohl von den Fahrzeugherstellern als auch vom Zubehörhandel vertrieben.

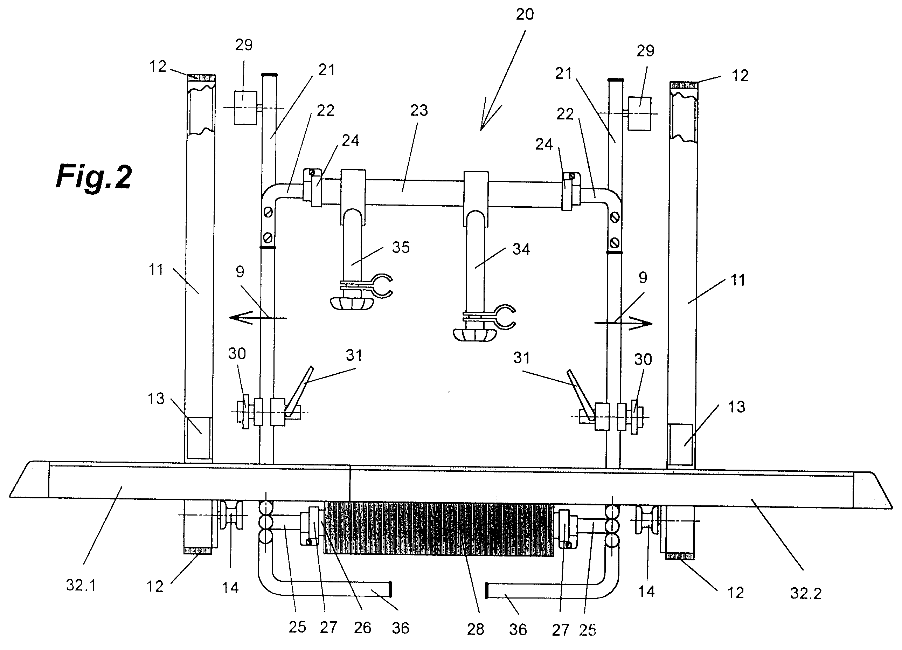

Am Dachlastträger 2, 3 sind mit Hilfe von Schrauben 15 Laufschienen 11 mit C-förmigem Querschnitt befestigt. In den Laufschienen 11 läuft ein aus Rohren zusammengesetzter Rahmen 20, der anhand der Fig. 2 noch im einzelnen beschrieben werden soll. Dieser Rahmen 20 besitzt an seinem rückseitigen Ende Laufrollen, die ein einachsiges Fahrwerk bilden. Am frontseitigen Ende des Rahmens 20 erkennt man V-förmige Schienen 32, 33, in die die Räder der Fahrräder (nicht dargestellt) gestellt werden, Handgriffe 36 und vor allem eine dick gepolsterte Karosseriestütze 28.

Die in Fig. 1 dargestellte Position des Rahmens 20 ist die Be- und Entladeposition.

Fig. 2 zeigt den Dachträger in einer vergrößerten Darstellung. Man erkennt die beiden parallelen Laufschienen 11 mit C-förmigem Querschnitt. Die Laufschienen 11 sind vorne und hinten mit Blechen 12 verschlossen.

Zwischen den Laufschienen 11 erkennt man den beweglichen Rahmen 20, gebildet durch gebogene und miteinander verschraubte Rohre 21, 22, 23, 25, 26. Die für die Breite verantwortlichen Rohre 22, 23; 25, 26 sind teleskopierbar. Sie werden mit Hilfe von Schraubklemmen 24, 27 fixiert. Auf diese Weise ist der Rahmen 20 stufenlos in der Breite verstellbar.

Die frontseitigen Rahmenquerrohre 25, 26 bilden die dick gepolsterte Karosseriestütze 28.

An den rückseitigen Querrohren 22, 23 sind Halter 34, 35 angelenkt, die eine lösbare Verbindung zu den Rahmen der Fahrräder (nicht dargestellt) herstellen. Die Räder der Fahrräder stehen wie schon erwähnt in den V-Schienen 32, 33.

Am rückseitigen Ende des Rahmens 20 sind Laufrollen 29 angebracht. Im Frontbereich des Rahmens 20 sind Klemmvorrichtungen 30 angeordnet. Die Laufrollen 29 und die Klemmvorrichtungen 30 können durch Ausschnitte 13 in die Laufschienen 11 eingeführt und aus den Laufschienen 11 wieder herausgehoben werden. Bei der Erstmontage werden zunächst die Schraubklemmen 24, 27 gelöst, die Rahmenrohre 22, 23; 25, 26 entsprechend den Pfeilen 9 auf die benötigte Breite auseinandergezogen, und abschließend die Schraubklemmen 24, 27 wieder angezogen.

Im Ausführungsbeispiel der Fig. 2 sind die Klemmvorrichtungen 30 mittels Schnellspannhebeln 31 zu betätigen. Statt dessen können aber auch Gewindestangen und Handräder eingesetzt werden.

Im Frontbereich der Laufschienen 11 sind Stützrollen 14 angeordnet, auf denen sich die Rahmenrohre 21 beim Einschieben und Herausziehen des Rahmens 20 abstützen.

Handgriffe 36 erleichtern dem Benutzer das Anheben bzw. Herablassen des Rahmens 20.

Um die insbesondere stufenlose Breitenverstellbarkeit des Rahmens 20 zu gewährleisten, sind die V-Schienen 32, 33 mit Langlöchern ausgerüstet. Dabei können die V-Schienen wie in Fig. 2 dargestellt auch aus zwei Teilen 32.1, 32.2 bestehen. Aufgrund der kürzeren Einzelteile erleichtert dies die Verpackung und den Transport.

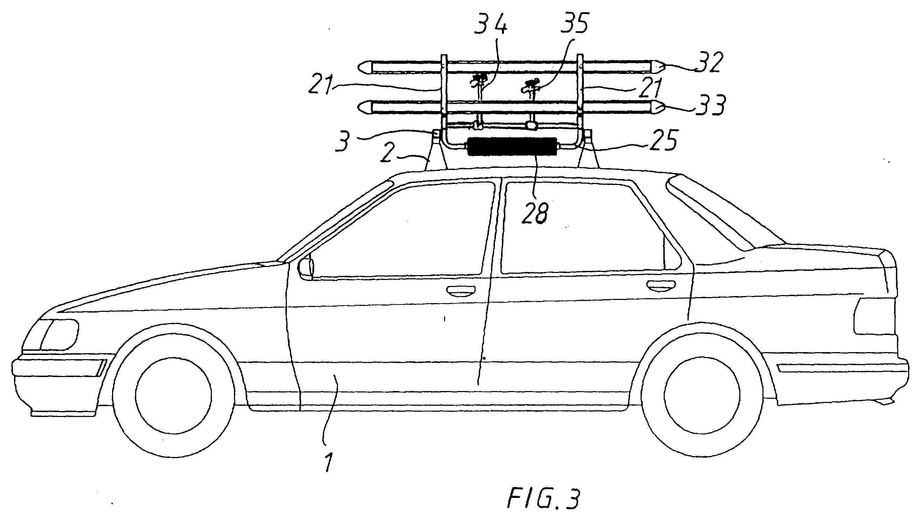

Fig. 3 zeigt eine Seitenansicht des Kraftfahrzeugs 1 mit dem Dachträger in Transportposition. Obwohl die Fahrräder selbst nicht dargestellt sind, läßt sich aus dieser Figur ohne weiteres ersehen, daß die Gesamtkonstruktion sehr kompakt ist und vor allem wenig Höhe benötigt, so daß gegebenenfalls auch Tiefgaragen befahren werden können.

## Patentansprüche

1. Vorrichtung für den liegenden Transport von Fahrrädern und dergleichen auf dem Dach von Kraftfahrzeugen (1), umfassend
- zwei parallele, C-förmige Laufschienen (11),
- einen aus Rohren (21, 22, 23, 25, 26) gebildeten Rahmen (20),
- zwei Laufrollen (29),
-- angebracht am rückseitigen Rahmenende
-- und in den Laufschienen (11) laufend,
- wenigstens eine V-Schiene (32, 33) am Rahmen (20), die die Räder eines Fahrrades hält,
- wenigstens einen Halter (34, 35) am Rahmen (20), der den Rahmen des Fahrrades lösbar hält,
- je einen Ausschnitt (13) im frontseitigen Bereich der Laufschienen (11) zum Einführen der Laufrollen (29) in die Laufschienen (11),
gekennzeichnet durch die Merkmale:
- der Rahmen (20) ist in der Breite verstellbar,
- im frontseitigen Bereich der Laufschienen (11) sind den Rahmen (20) haltende Stützrollen (14) befestigt,
- ein Teil der Rahmenrohre (25, 26) bildet eine Karosseriestütze (28) mit großflächiger Auflage,
- es sind Klemmeinrichtungen (30) vorgesehen, die den Rahmen (20) während des Dachtransports an den Laufschienen (11) fixieren.

2. Vorrichtung nach Anspruch 1, gekennzeichnet durch das Merkmal:
- der Rahmen (20) ist stufenlos in der Breite verstellbar,
- die für die Breite des Rahmens (20) verantwortlichen Rohre (22, 23; 25, 26) sind teleskopierbar.

3. Vorrichtung nach Anspruch 1 oder 2, gekennzeichnet durch das Merkmal:
- Schraubklemmen (24, 27) fixieren die verstellbaren Rahmenrohre (22, 23; 25, 26).

4. Vorrichtung nach einem der Ansprüche 1 bis 3, gekennzeichnet durch das Merkmal:
- die Karosseriestütze (28) ist dick gepolstert.

5. Vorrichtung nach einem der Ansprüche 1 bis 4, gekennzeichnet durch das Merkmal:
- an der Frontseite des Rahmens (20) sind Handgriffe (36) vorgesehen.

6. Vorrichtung nach einem der Ansprüche 1 bis 5, gekennzeichnet durch das Merkmal:
- die Klemmeinrichtungen (30) sind mit Gewindestange und Handrad ausgerüstet.

7. Vorrichtung nach einem der Ansprüche 1 bis 5, gekennzeichnet durch das Merkmal:
- die Klemmeinrichtungen (30) sind mit einem Hebel-Schnellspanner (31) ausgerüstet.

8. Vorrichtung nach einem der Ansprüche 1 bis 7, gekennzeichnet durch das Merkmal:
- die V-Schienen (32, 33) sind mit Langlöchern versehen.

9. Vorrichtung nach einem der Ansprüche 1 bis 8, gekennzeichnet durch das Merkmal:
- die V-Schienen (32, 33) bestehen aus zwei gegeneinander verschiebbaren Teilen (32.1, 32.2).

10. Vorrichtung nach einem der Ansprüche 1 bis 9, gekennzeichnet durch das Merkmal:
- die Laufschienen (11) sind mit Einrichtungen zur lösbaren Befestigung am Kraftfahrzeug ausgerüstet.

11. Vorrichtung nach einem der Ansprüche 1 bis 9, gekennzeichnet durch das Merkmal:
- die Laufschienen (11) sind mit Einrichtungen (15) zur lösbaren Befestigung an einem kraftfahrzeugspezifischen Dachlastträger (2, 3) ausgerüstet.

12. Vorrichtung nach einem der Ansprüche 1 bis 11, gekennzeichnet durch das Merkmal:
- Rasthaken fixieren den Rahmen (20) zusätzlich an den Laufschienen (11).
